(19) Europäisches Patentamt / European Patent Office / Office européen des brevets

(11) **EP 3 031 873 B1**

(12) **EUROPEAN PATENT SPECIFICATION**

(45) Date of publication and mention
of the grant of the patent:
**18.10.2017 Bulletin 2017/42**

(21) Application number: **14834600.0**

(22) Date of filing: **06.08.2014**

(51) Int Cl.:
*C09D 201/04* (2006.01)    *C09D 5/03* (2006.01)
*C09D 7/12* (2006.01)    *C09D 127/12* (2006.01)
*C09D 133/00* (2006.01)    *C09D 163/00* (2006.01)
*C09D 167/00* (2006.01)    *C09D 175/04* (2006.01)
*C09D 201/08* (2006.01)    *C09D 201/10* (2006.01)

(86) International application number:
**PCT/JP2014/070776**

(87) International publication number:
**WO 2015/020107 (12.02.2015 Gazette 2015/06)**

(54) **METHOD FOR MANUFACTURING POWDER COATING MATERIAL AND METHOD FOR MANUFACTURING CARBOXYL-GROUP-CONTAINING FLUORORESIN**

VERFAHREN ZUR HERSTELLUNG EINES PULVERBESCHICHTUNGSMATERIALS UND VERFAHREN ZUR HERSTELLUNG EINES CARBOXYLGRUPPENHALTIGEN FLUORHARZES

PROCÉDÉ DE FABRICATION D'UN MATÉRIAU DE PEINTURE EN POUDRE ET PROCÉDÉ DE FABRICATION D'UNE RÉSINE FLUORÉE CONTENANT DES GROUPES CARBOXYLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2013 JP 2013166645**

(43) Date of publication of application:
**15.06.2016 Bulletin 2016/24**

(73) Proprietor: **Asahi Glass Company, Limited**
**Tokyo 100-8405 (JP)**

(72) Inventors:
• **SAITO, Shun**
**Tokyo 100-8405 (JP)**

• **AIKAWA, Masataka**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**WO-A1-01/27208        JP-A- H01 103 670**
**JP-A- H03 140 379     JP-A- H04 310 272**
**JP-A- H08 283 428     JP-A- H10 139 812**
**JP-A- S58 136 605     JP-A- 2003 096 377**
**JP-A- 2003 105 249    US-A- 4 487 893**
**US-A- 5 447 982       US-A1- 2012 220 712**
**US-A1- 2012 247 457   US-B1- 6 864 316**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 031 873 B1

**Description**

The present invention relates to a process for producing a powder coating material, a coated article and a process for its production, and a method for producing a carboxy group-containing fluororesin.

In recent years, global scale environmental destruction problems such as global warming, ozone layer depletion, acid rain, etc. have gained prominent attention. Internationally, environmental pollution measures are advocated, and various regulations have been established from the viewpoint of environmental protection. Among them, release into the atmosphere of organic solvents (VOC) has been a serious problem, and also in each industry, the movement for de-organic solvents (de-VOC) along with the trend for strengthening VOC regulations has become active. Also in the paint industry, as a substitute for conventional organic solvent-based coating material, a powder coating material is highly expected as a coating material which contains no VOC and which is friendly to the environment as it can be recovered and reused without requiring exhaust treatment or wastewater treatment.

As such a powder coating material, an acrylic resin powder coating material, a polyester resin powder coating material or an epoxy resin powder coating material, is mainly used.

However, cured films formed by using these powder coating materials have such a drawback that they are poor in weather resistance.

A fluororesin is commonly known as a resin excellent in weather resistance. The following powder coating materials have been proposed as powder coating materials containing fluororesins.

> (1) A powder coating material composed of a composition comprising a hydroxy group-containing fluororesin, and a polyuretdione curing agent or a blocked isocyanate curing agent (Patent Document 1).
> (2) A powder coating material composed of a composition comprising a carboxy group-containing fluororesin and a β-hydroxyalkylamide curing agent (Patent Document 2).

> Patent Document 1: JP-A-2003-105269
> Patent Document 2: JP-A-2003-096377

However, by a study made by the present inventors, it has been found that in a case where a cured film is formed by using the powder coating material of (1), the melt viscosity of the hydroxy group-containing fluororesin is high, whereby air present in the powder coating material or a gas formed during the reaction of the curing agent tends to remain and form voids (gaps) in the cured film. When the powder coating material contains a pigment, dispersibility of the pigment in the hydroxy group-containing fluororesin is insufficient, and the pigment is likely to be aggregated in the cured film, whereby voids are further likely to be formed between the aggregated pigment and the fluororesin.

The carboxy group-containing fluororesin contained in the powder coating material of (2) tends to partially undergo gelation during the synthesis in the solvent or during desolvation after the synthesis. In a cured film formed from the powder coating material containing the gelled fluororesin, air present in the powder coating material or a gas formed during the reaction of the curing agent is less likely to be released from the cured film and is likely to form voids.

And, if water penetrates into voids of the cured film, the fluororesin tends to be thereby deteriorated. When a pigment (titanium oxide, etc.) is present in the cured film, if water penetrates into voids in the cured film, the fluororesin tends to be further deteriorated by the photocatalytic action of the pigment.

An object of the present invention is to provide a process for producing a powder coating material capable of forming a cured film which is excellent in weather resistance and which has few voids (gaps); and a method for producing a carboxy group-containing fluororesin which is less susceptible to gelation.

The present invention provides a process for producing a powder coating material, and a method for producing a carboxy group-containing fluororesin, having the following constructions [1] to [10].

> [1] A process for producing a powder coating material containing a powder (X) composed of a composition (α) comprising a fluororesin (A) having carboxy groups, or alkoxysilyl groups and urethane bonds, and a curing agent (D), said process comprising the following step (a) and step (b),

> > (a) a step of melt-kneading a mixture comprising a hydroxy group-containing fluororesin (B), an acid anhydride (C1) or a compound (C2) having an alkoxysilyl group and an isocyanate group, and the curing agent (D), to obtain a kneaded product composed of the composition (α),
> > (b) a step of pulverizing the kneaded product to obtain the powder (X).

> [2] The process for producing a powder coating material according to the above [1], wherein said mixture further contains a pigment (E).
> [3] The process for producing a powder coating material according to the above [1] or [2], wherein said mixture further contains other resin (F) other than the fluororesin (A).

[4] The process for producing a powder coating material according to the above [3], wherein said other resin (F) is at least one member selected from the group consisting of an acrylic resin, a polyester resin, an epoxy resin and an urethane resin.

[5] The process for producing a powder coating material according to the above [1] or [2], which further contains the following step (d):

(d) a step of dry-blending the powder (X) and a powder (Y) composed of a composition (β) containing other resin (F) other than the fluororesin (A) and containing no fluororesin (A).

[6] The process for producing a powder coating material according to the above [5], wherein said other resin (F) is at least one member selected from the group consisting of an acrylic resin, a polyester resin, an epoxy resin and an urethane resin.

[7] The process for producing a powder coating material according to any one of the above [1] to [6], wherein the hydroxy group-containing fluororesin (B) has units derived from tetrafluoroethylene or chlorotrifluoroethylene, units derived from a hydroxyalkyl vinyl ether, and units derived from at least one member selected from the group consisting of a cycloalkyl vinyl ether, an alkyl vinyl ether and a carboxylic acid vinyl ester.

[8] The process for producing a powder coating material according to any one of the above [1] to [7], wherein the curing agent (D) is a blocked isocyanate curing agent (D1).

[9] The process for producing a powder coating material according to any one of the above [1] to [8], wherein the number of moles of the acid anhydride (C1) is from 0.1 to 2.0 per mol of the hydroxy group in the hydroxy group-containing fluororesin (B), or the number of moles of the compound (C2) having an alkoxysilyl group and an isocyanate group is from 0.03 to 0.2 per mol of the hydroxy group in the hydroxy group-containing fluororesin (B).

[10] A method for producing a carboxy group-containing fluororesin, which comprises melt-kneading a mixture comprising a hydroxy group-containing fluororesin and an acid anhydride to obtain a kneaded product containing a carboxy group-containing fluororesin.

According to the process for producing a powder coating material of the present invention, it is possible to produce a powder coating material capable of forming a cured film which is excellent in weather resistance and which has few voids (gaps).

According to the method for producing a carboxy group-containing fluororesin of the present invention, it is possible to obtain a carboxy group-containing fluororesin which is less susceptible to gelation.

The following definitions of terms apply throughout the specification and claims.

The "alkoxysilyl group" is a group composed of a silicon atom and an alkoxy group bonded thereto.

The "dry blending" is meant for mixing at least two types of powders without melting the powders and without addition of a solvent.

The "coating film" is meant for a film made of a melt of a powder coating material formed by applying the powder coating material.

The "cured film" is meant for a film formed by curing the above coating film.

The "one coating" is meant for coating only once.

The "powder coating material is melted and cured" means that the powder coating material is made in a molten state, and reactive components therein are reacted for curing.

The "thermosetting resin" is meant for a compound having reactive groups capable of reacting with a curing agent by heating.

The "(meth) acrylate" is a generic term for an acrylate and a methacrylate.

The "unit" is meant for a moiety derived from a monomer, which is present in a polymer to constitute the polymer. A unit derived from a monomer having a carbon-carbon unsaturated double bond and formed by addition polymerization of the monomer, is a divalent unit formed by cleavage of the unsaturated double bond. A unit derived from a polyvalent carboxylic acid compound and constituting a polyester resin, is a monovalent or higher valent unit formed by removing a hydroxy group from at least one carboxy group in the polyvalent carboxylic acid compound, and a unit derived from a polyhydric alcohol compound is a monovalent or higher valent unit formed by removing a hydrogen atom from at least one hydroxy group in the polyhydric alcohol compound. Further, one having a structure of a certain unit chemically converted after formation of a polymer, may also be called a unit.

Hereinafter, as the case requires, units derived from an individual monomer may be called by a name having "units" attached to the monomer name.

[Powder coating material]

The powder coating material to be obtained by the production process of the present invention, is a powder coating material (I) containing the following powder (X), or a powder coating material (II) containing the following powder (X) and following powder (Y).

Powder (X): A powder composed of a composition ($\alpha$) comprising a fluororesin (A) having carboxy groups, or alkoxysilyl groups and urethane bonds, and a curing agent (D). The composition ($\alpha$) may contain, as the case requires, a pigment (E), other resin (F) other than the fluororesin (A), a curing catalyst (G) and other components (H). Further, it may contain unreacted raw materials (hydroxy group-containing fluororesin (B), acid anhydride (C1), compound (C2)) used at the time of obtaining a fluororesin (A), as described later.

Powder (Y): A powder composed of a composition ($\beta$) containing other resin (F) other than the fluororesin (A) and containing no fluororesin (A). The composition ($\beta$) may contain, as the case requires, a curing agent (D), a pigment (E), a curing catalyst (G) and other components (H).

The content of the powder (X) in the powder coating material (I) is preferably from 50 to 100 mass%, more preferably from 70 to 100 mass%, further preferably from 80 to 100 mass%, particularly preferably from 90 to 100 mass%. The powder coating material (I) may be a coating material composed solely of the powder (X).

The total content of the powder (X) and the powder (Y) in the powder coating material (II) is preferably from 50 to 100 mass%, more preferably from 70 to 100 mass%, further preferably from 80 to 100 mass%, particularly preferably from 90 to 100 mass%. The powder coating material (II) may be a coating material composed solely of the powder (X) and the powder (Y). The mixing ratio of the powder (X) to the powder (Y) in the powder coating material (II) (i.e. powder (X)/powder (Y)) is preferably from 20/80 to 80/20 (by mass ratio), particularly preferably from 25/75 to 75/25 (by mass ratio). When the proportion of the powder (X) is at least the above lower limit value, the cured film will be excellent in weather resistance. When the proportion of the powder (Y) is at least the above lower limit value, it is possible to reduce the cost of the cured film.

In a case where the powder (X) contained in the powder coating material (I) contains other resin (F) which can be layer-separated without being compatible with the fluororesin (A), at the time when the powder coating material (I) is applied on a substrate by one coating to form a coating film made of a melt of the powder coating material (I) and to let reactive components in the coating film be reacted, and the coating film is cooled for curing, a fluororesin layer composed mainly of a cured product of the fluororesin (A) contained in the powder (X) and a layer of other resin composed mainly of other rein (F) contained in the powder (X) or its cured product, undergo layer separation. In the present invention, such a reaction, curing and layer separation may proceed simultaneously. The layer of other resin is disposed on the substrate side, and the fluorporesin layer is disposed on the air side.

In a case where the powder (Y) contained in the powder coating material (II) contains other resin (F) which can be layer-separated without being compatible with the fluororesin (A), at the time when the powder coating material (II) is applied on a substrate by one coating to form a coating film made of a melt of the powder coating material (II) and to let reactive components in the coating film be reacted, and the coating film is cooled for curing, a fluororesin layer composed mainly of a cured product of the fluororesin (A) derived from the powder (X) and a layer of other resin composed mainly of said other rein (F) derived from the powder (Y) or its cured product, undergo layer separation. In the present invention, such a reaction, curing and layer separation may proceed simultaneously. The layer of other resin is disposed on the substrate side, and the fluororesin layer is disposed on the air side.

(Fluororesin (A))

The fluororesin (A) is a fluororesin having carboxy groups or a fluororesin having alkoxysilyl groups and urethane bonds.

The fluororesin (A) is obtainable by a production method which will be described later. That is, a fluororesin having carboxy groups is obtainable by reacting hydroxy groups in a hydroxy group-containing fluororesin (B) and an acid anhydride (C1) to form ester bonds and carboxy groups, at the time of melt-kneading a mixture comprising the hydroxy group-containing fluororesin (B), the acid anhydride (C1) and a curing agent (D). A fluororesin having alkoxysilyl groups and urethane bonds is obtainable by reacting hydroxy groups in a hydroxy group-containing fluororesin (B) and isocyanate groups in a compound (C2) having an alkoxysilyl group and an isocyanate group, to form urethane bonds and at the same time to introduce alkoxysilyl groups derived from the compound (C2) as side groups, at the time of melt-kneading a mixture comprising the hydroxy group-containing fluororesin (B), the compound (C2) and a curing agent (D).

Thus, the carboxy groups in the fluororesin (A) are derived from the acid anhydride (C1) used in the production method which will be described later. The alkoxysilyl groups in the fluororesin (A) are derived from an alkoxysilyl group in the compound (C2) used in the production method which will be described later. The urethane bonds in the fluororesin (A) are derived from hydroxy groups in the hydroxy group-containing fluororesin (B) and isocyanate groups in the compound (C2), used in the production method which will be described later. The fluororesin (A) may have hydroxy groups derived from the raw material hydroxy group-containing fluororesin (B).

In a case where the composition (α) contains unreacted raw materials (hydroxy group-containing fluororesin (B), acid anhydride (C1), compound (C2)), such unreacted raw materials shall be handled as the fluororesin (A).

(Hydroxy group-containing fluororesin (B))

The hydroxy group-containing fluororesin (B) is preferably a hydroxy group-containing fluorinated polymer having units derived from a fluoroolefin, units derived from a monomer (hereinafter referred to also as "monomer (a1)") having a hydroxy group, copolymerizable with a fluoroolefin, and, as the case requires, units derived from other monomer (hereinafter referred to also as "monomer (a2)") other than a fluoroolefin and monomer (a1).

The hydroxy group-containing fluororesin (B) may be a hydroxy group-containing fluorinated polymer having hydroxy groups introduced by conversion of reactive groups in a polymer. As such a hydroxy group-containing fluorinated polymer, preferred is a fluorinated polymer obtainable by reacting a fluorinated polymer having units derived from a fluoroolefin, units derived from a monomer having a reactive functional group other than a hydroxy group, and, as the case requires, units derived from said monomer (a2), with a compound having a second reactive functional group reactive with said reactive functional group, and a hydroxy group.

A fluoroolefin is a compound having one or more hydrogen atoms of a hydrocarbon olefin (general formula: $C_nH_{2n}$) substituted by fluorine atoms.

The number of carbon atoms in the fluoroolefin is preferably from 2 to 8, particularly preferably from 2 to 6.

The number of fluorine atoms in the fluoroolefin is preferably at least 2, particularly preferably 3 or 4. When the number of fluorine atoms is at least 2, the cured film will be excellent in weather resistance. In the fluoroolefin, at least one hydrogen atom not substituted by a fluorine atom may be substituted by a chlorine atom. When the fluoroolefin has a chlorine atom, a pigment, etc. (especially a colored organic pigment such as cyanine blue, cyanine green, etc.) can be easily dispersed in the fluororesin (A). Further, the glass transition temperature of the hydroxy group-containing fluororesin (B) can be designed to be at least 50°C, and it is possible to suppress blocking of a cured film.

The fluoroolefin is preferably at least one member selected from the group consisting of tetrafluoroethylene (hereinafter referred to also as "TFE"), chlorotrifluoroethylene (hereinafter referred to also as "CTFE"), hexafluoropropylene, vinylidene fluoride and vinyl fluoride, particularly preferably TFE or CTFE.

As the fluoroolefin, one type may be used alone, or two or more types may be used in combination.

As the fluoroolefin units, units formed directly by polymerization of a fluoroolefin are preferred.

The monomer (monomer (a1), monomer (a2), etc.) to be copolymerized with a fluoroolefin may be a monomer having a fluorine atom other than a fluoroolefin, but a monomer having no fluorine atom is preferred.

The monomer (a1) is a monomer having a hydroxy group.

The monomer having a hydroxy group may, for example, be allyl alcohol, a hydroxyalkyl vinyl ether (2-hydroxyethyl vinyl ether, 4-hydroxybutyl vinyl ether, cyclohexanediol monovinyl ether, etc.), a hydroxyalkyl allyl ether (2-hydroxyethyl allyl ether, etc.), a vinyl hydroxy alkanoate (vinyl hydroxypropionate, etc.), a hydroxyalkyl (meth)acrylate (hydroxyethyl (meth)acrylate, etc.), etc.

As the monomer (a1), one type may be used alone, or two or more types may be used in combination.

The monomer (a2) is preferably a vinyl monomer, i.e. a compound having a carbon-carbon double bond. The vinyl monomer is excellent in alternate copolymerizability with a fluoroolefin, and the polymerization yield can thereby be made high. Further, even when remained unreacted, it is less influential to the cured film, and can be easily removed in the production process.

The vinyl monomer may, for example, be a vinyl ether, an allyl ether, a carboxylic acid vinyl ester, a carboxylic acid allyl ester, an olefin, etc.

The vinyl ether may, for example, be a cycloalkyl vinyl ether (cyclohexyl vinyl ether (hereinafter referred to also as "CHVE"), etc.), an alkyl vinyl ether (nonyl vinyl ether, 2-ethyl hexyl vinyl ether, hexyl vinyl ether, ethyl vinyl ether, n-butyl vinyl ether, tert-butyl vinyl ether, etc.), etc.

The allyl ether may, for example, be an alkyl allyl ether (ethyl allyl ether, hexyl allyl ether, etc.).

The carboxylic acid vinyl ester may, for example, be a vinyl ester of a carboxylic acid (acetic acid, butyric acid, pivalic acid, benzoic acid, propionic acid, etc.). Further, as a vinyl ester of a carboxylic acid having a branched alkyl group, commercially available VeoVa-9 or VeoVa-10 (each manufactured by Shell Chemicals, trade name), etc. may be used.

The carboxylic acid allyl ester may, for example, be an allyl ester of a carboxylic acid (acetic acid, butyric acid, pivalic acid, benzoic acid, propionic acid, etc.).

The olefin may, for example, be ethylene, propylene, isobutylene, etc.

The monomer (a2) is preferably a cycloalkyl vinyl ether, particularly preferably, CHVE, from such a viewpoint that the glass transition temperature of the hydroxy group-containing fluororesin (B) can be designed to be at least 50°C, and it is possible to suppress blocking of a cured film.

The monomer (a2) is preferably one having a linear or branched alkyl group with at least 3 carbon atoms from such a viewpoint that the cured film will be excellent in flexibility.

As the monomer (a2), one type may be used alone, or two or more types may be used in combination.

As a combination of monomers constituting the hydroxy group-containing fluororesin (B), the following combination (1) is preferred, and the combination (2) or (3) is particularly preferred, from the viewpoint of weather resistance, adhesion, flexibility and blocking resistance.

### Combination (1)

| | |
|---|---|
| Fluoroolefin: | TFE or CTFE, |
| Monomer (a1): | a hydroxy alkyl vinyl ether, |
| Monomer (a2): | at least one member selected from a cycloalkyl vinyl ether, an alkyl vinyl ether and a carboxylic acid vinyl ester. |

### Combination (2)

| | |
|---|---|
| Fluoroolefin: | TFE, |
| Monomer (a1): | a hydroxy alkyl vinyl ether, |
| Monomer (a2): | CHVE or tert-butyl vinyl ether |

### Combination (3)

| | |
|---|---|
| Fluoroolefin: | CTFE, |
| Monomer (a1): | a hydroxy alkyl vinyl ether, |
| Monomer (a2): | CHVE or tert-butyl vinyl ether. |

The proportion of the fluoroolefin units is preferably from 30 to 70 mol%, particularly preferably from 40 to 60 mol%, among all units (100 mol%) in the hydroxy group-containing fluororesin (B). When the fluoroolefin units are at least the above lower limit value, the cured film will be excellent in weather resistance. When the fluoroolefin units are at most the above upper limit value, in a case where the cured film has a single layer structure, it is excellent in adhesion to a substrate, and in a case where the cured film has a double-layered structure, the adhesion between the fluororesin layer and the other resin layer will be excellent.

The proportion of the monomer (a1) units is preferably from 0.5 to 20 mol%, particularly preferably from 1 to 15 mol%, among all units (100 mol%) in the hydroxy group-containing fluororesin (B). When the proportion of the monomer (a1) units is at least the above lower limit value, in a case where the cured film has a single layer structure, it will be excellent in adhesion to the substrate, and in a case where the cured film has a double-layered structure, the adhesion between the fluororesin layer and the other resin layer will be excellent. When the proportion of the monomer (a1) units is at most the above upper limit value, the cured film will be excellent in scratch resistance.

The proportion of the monomer (a2) units is preferably from 20 to 60 mol%, particularly preferably from 30 to 50 mol%, among all units (100 mol%) in the hydroxy group-containing fluororesin (B). When the proportion of the monomer (a2) units is at least the above lower limit value, the glass transition temperature of the hydroxy group-containing fluororesin (B) will be proper, and it will be easy to produce a powder coating material. When the proportion of the monomer (a2) units is at most the above upper limit value, in a case where the cured film has a single layer structure, it will be excellent in adhesion to the substrate, and in a case where the cured film has a double-layered structure, the adhesion between the fluororesin layer and the other resin layer will be excellent.

The number average molecular weight of the hydroxy group-containing fluororesin (B) is preferably from 3,000 to 50,000, particularly preferably 5,000 to 30,000. When the number average molecular weight of the hydroxy group-containing fluororesin (B) is at least the above lower limit value, the cured film will be excellent in water resistance and salt water resistance. When the number average molecular weight of the hydroxy group-containing fluororesin (B) is at most the above upper limit value, the cured film will be excellent in surface smoothness.

The hydroxy value of the hydroxy group-containing fluororesin (B) is preferably from 5 to 100 mgKOH/g, particularly preferably from 10 to 80 mgKOH/g. When the hydroxy value of the hydroxy group-containing fluororesin (B) is at least the above lower limit value, in a case where the cured film has a single layer structure, it will be excellent in adhesion to the substrate, and in a case where the cured film has a double-layered structure, the adhesion between the fluororesin layer and the other resin layer will be excellent. When the hydroxy value of the hydroxy group-containing fluororesin (B) is at most the above upper limit value, the cured film will be excellent in crack resistance under temperature cycles between a high temperature of at least 100°C and a low temperature of at most 10°C. The measurement of the hydroxy value is carried out in accordance with JIS K1557-1 (2007 edition).

The glass transition temperature of the hydroxy group-containing fluororesin (B) is preferably from 30 to 150°C, more preferably from 35 to 120°C, particularly preferably from 35 to 100°C. When the glass transition temperature of the hydroxy group-containing fluororesin (B) is at least the above lower limit value, it will be easy to produce a powder coating material. When the glass transition temperature of the hydroxy group-containing fluororesin (B) is at most the above upper limit value, the cured film will be excellent in surface smoothness.

(Acid anhydride (C1))

As the acid anhydride, from the viewpoint of excellent reactivity with the hydroxy group-containing fluororesin (B), a compound having a molecular weight of from 90 to 200 is preferred. From the viewpoint of excellent reactivity with the hydroxy group-containing fluororesin (B), a $C_{4-15}$ compound is preferred. From the viewpoint of excellent reactivity with the hydroxy group-containing fluororesin (B), a compound having a melting point of from 20 to 180°C is preferred.

The acid anhydride may be a dibasic acid anhydride.

The dibasic acid anhydride may, for example, be succinic anhydride (molecular weight: 100.1, melting point: 120°C, number of carbon atoms: 4), glutaric anhydride (molecular weight: 114.1, melting point: 52°C, number of carbon atoms: 5), itaconic anhydride (molecular weight: 112.1, melting point: 67°C, number of carbon atoms: 5), anhydrous 1,2-cyclohexane dicarboxylic acid (hexahydrophthalic anhydride) (molecular weight: 154.0, melting point: 35°C, number of carbon atoms: 8), anhydrous cis-4-cyclohexene-1,2-dicarboxylic acid (molecular weight: 152.0, melting point: 66°C, number of carbon atoms: 8), phthalic anhydride (molecular weight: 148.1, melting point: 131°C, number of carbon atoms: 8), 4-methylhexahydrophthalic anhydride (molecular weight: 168.0, melting point: 22°C, number of carbon atoms: 9), anhydrous 1,8-naphthalic acid (molecular weight: 198.2, melting point: 17°C, number of carbon atoms: 11), maleic anhydride (molecular weight: 98.1, melting point: 52.6°C, carbon number: 4), etc.

(Compound (C2))

The compound (C2) is a compound having an alkoxysilyl group and an isocyanate group.

As such a compound, a silane coupling agent having an isocyanate group may be mentioned.

As such a silane coupling agent, 3-isocyanate propyl triethoxysilane, 3-isocyanate propyl trimethoxysilane, etc. may be mentioned.

(Curing agent (D))

The curing agent (D) is a compound to cure a resin (fluororesin (A) or other resin (F)) by reacting with reactive groups of the resin to cross-link the resin or to make the molecular weight high. The curing agent (D) has at least two reactive groups capable of reacting with reactive groups (hydroxy groups, carboxy groups, etc.) of the resin. As the reactive groups of the curing agent (D), ones which are reactive with the reactive groups of the resin at room temperature, are not desirable, and accordingly, they are preferably reactive groups capable of reacting at the time when the powder coating material is heated and melted. For example, rather than isocyanate groups having a high reactivity at room temperature, blocked isocyanate groups are preferred. At the time when the powder coating is heated and melted, blocked isocyanate groups become isocyanate groups, as the blocking agent is desorbed, and the isocyanate groups will act as the reactive groups.

As the curing agent (D), it is possible to use a known compound, which may, for example, be a blocked isocyanate curing agent, an amine type curing agent (melamine resin, guanamine resin, sulfonamide resin, urea resin, aniline resin, etc.), a β-hydroxyalkylamide curing agent, a triglycidyl isocyanurate curing agent, etc. A blocked isocyanate curing agent (D1) is particularly preferred, from the viewpoint of excellent adhesion to the substrate, processability of the product after coating and water resistance of the cured film.

In the case of a fluororesin (A) having all hydrogen atoms in a hydroxy group-containing fluororesin (B) converted to carboxy groups, the curing agent (D) is preferably a β-hydroxyalkylamide curing agent or a triglycidyl isocyanurate curing agent.

As the curing agent (D), one type may be used alone, or two or more types may be used in combination.

The softening temperature of the curing agent (D) is preferably from 10 to 120°C, particularly preferably from 40 to 100°C. When the softening temperature is at least the above lower limit value, the powder coating material will be scarcely cured at room temperature, and granular agglomerates are less likely to be formed. When the softening temperature is at most the above upper limit value, at the time of producing a powder by melt-kneading the composition, the curing agent (D) can easily be homogeneously dispersed in the powder, and the obtainable cured film will be excellent in surface smoothness, strength, moisture resistance, etc.

As the blocked isocyanate curing agent (D1), preferred is one which is solid at room temperature.

The blocked isocyanate curing agent (D1) is preferably one produced by reacting a polyisocyanate obtained by reacting an aliphatic, aromatic or aromatic-aliphatic diisocyanate and a low-molecular compound having active hydrogen, with a blocking agent for masking.

The diisocyanate may, for example, be tolylene diisocyanate, 4,4'-diphenylmethane diisocyanate, xylylene diisocyanate, hexamethylene diisocyanate, 4,4'-methylenebis(cyclohexyl isocyanate), methylcyclohexane diisocyanate, bis(isocyanatomethyl)cyclohexane isophorone diisocyanate, dimer acid diisocyanate, lysine diisocyanate, etc.

The low molecular compound having active hydrogen may, for example, be water, ethylene glycol, propylene glycol, trimethylolpropane, glycerin, sorbitol, ethylenediamine, ethanolamine, diethanolamine, hexamethylenediamine, isocyanurate, uretdione, a low molecular weight polyester containing hydroxy groups, polycaprolactone, etc.

The blocking agent may, for example, be an alcohol (methanol, ethanol, benzyl alcohol, etc.), a phenol (phenol, cresol, etc.), a lactam (caprolactam, butyrolactam, etc.), an oxime (cyclohexanone, oxime, methyl ethyl ketoxime, etc.), etc.

(Pigment (E))

The pigment (E) is preferably at least one member selected from the group consisting of a luster pigment, an anticorrosive pigment, a coloring pigment and an extender pigment.

A luster pigment is a pigment to luster a coating film. The luster pigment may, for example, be aluminum powder, nickel powder, stainless powder, copper powder, bronze powder, gold powder, silver powder, mica powder, graphite powder, glass flakes, scale-like iron oxide powder, etc.

An anticorrosive pigment is a pigment to prevent corrosion or deterioration of a substrate which is required to have corrosion resistance. As such an anticorrosive pigment, preferred is a lead-free anticorrosive, which presents little impact to the environment. The lead-free anticorrosive pigment may, for example, be zinc cyanamide, zinc oxide, zinc phosphate, calcium magnesium phosphate, zinc molybdate, barium borate, zinc cyanamide calcium, etc.

A coloring pigment is a pigment for coloring the cured film. The coloring pigment may, for example, be titanium oxide, carbon black, iron oxide, phthalocyanine blue, phthalocyanine green, quinacridone, isoindolinone, benzimidazolone, dioxazine, etc.

An extender pigment is a pigment to improve the hardness of the cured film and to increase the thickness of the cured film. Further, it is preferably incorporated in that in a case where the substrate is cut, the cut surface of the cured film is thereby made clean. The extender pigment may, for example, be talc, barium sulfate, mica, calcium carbonate, etc.

An inorganic pigment including titanium oxide is likely to accelerate a photocatalytic reaction in a hot and humid region. The photocatalytic reaction is promoted by moisture and ultraviolet rays. If voids (gaps) are present in the cured film, water penetrates into the voids, and the cured film is likely to be deteriorated by the photocatalytic action of titanium oxide. In the cured film formed from the powder coating material obtained by the production process of the present invention, since the voids are few, even if titanium oxide is present in the cured film, the cured film is scarcely deteriorated by such a photocatalytic reaction.

Titanium oxide is preferably one having surface treatment applied so that a photocatalyst reaction will be unlikely to proceed. Specifically, titanium oxide having been surface-treated with e.g. silica, alumina, zirconia, selenium, an organic component (polyol, etc.), is preferred. Particularly preferred is titanium oxide having the titanium oxide content adjusted to from 83 to 90 mass% by such surface treatment. When the titanium oxide content is at least the above lower limit value, the cured film will be excellent in whiteness. When the titanium oxide content is at most the above upper limit value, the cured film will be scarcely deteriorated.

Commercial products of titanium oxide may, for example, be "Tipaque (registered trademark) PFC105" (titanium oxide content: 87 mass%) and "Tipaque (registered trademark) CR95" (titanium oxide content: 90 mass%), manufactured by Ishihara Sangyo Kaisha, Ltd., "D918" (titanium oxide content: 85 mass%) manufactured by Sakai Chemical Industry Co., Ltd. "Ti-Pure (registered trademark) R960" (titanium oxide content: 89 mass%) and "Ti-Select (registered trademark)" (titanium oxide content: 90 mass%), manufactured by DuPont, etc.

(Other resin (F))

Other resin (F) is a resin other than the fluororesin (A).

Such other resin (F) may, for example, be a fluororesin (F1) other than the fluororesin (A), or a thermosetting resin (F2) other than the fluororesin (A) and the fluororesin (F1).

<Fluororesin (F1)>

The fluororesin (F1) may, for example, be a TFE- perfluoro(alkyl vinyl ether) copolymer (hereinafter referred to also as "PFA"), a TFE-hexafluoropropylene copolymer, a TFE-perfluoro(alkyl vinyl ether)-hexafluoropropylene copolymer, an ethylene-TFE copolymer (hereinafter referred to also as "ETFE"), polyvinylidene fluoride (hereinafter referred to also as "PVDF"), polyvinyl fluoride, polychlorotrifluoroethylene, an ethylene-CTFE copolymer, a fluorinated polymer having reactive groups, which will be described later, etc.

The fluororesin (F1) may further have, as the case requires, units derived from another monomer, within a range not to impair the essential properties.

Such another monomer is a monomer other than monomers to form units essential as units constituting the fluororesin (F1) (such as ethylene and TFE in ETFE, TFE and a perfluoro(alkyl vinyl ether) in PFA).

As such another monomer, vinylidene fluoride is particularly preferred, since the obtainable fluororesin (F1) will be excellent in adhesion to a substrate (in particular an aluminum substrate), and fixing of an aluminum curtain wall with a sealing agent will thereby be easy.

The melting point of the fluororesin (F1) is preferably at most 300°C, more preferably at most 200°C, particularly preferably at most 180°C. When the melting point of the fluororesin (F1) is at most the above upper limit value, the cured film will be excellent in surface smoothness.

<Thermosetting resin (F2)>

The thermosetting resin (F2) is preferably one that can be layer-separated without being compatible with the fluororesin (A) in the melting and curing process of the powder coating material. As the thermosetting resin (F2), an acrylic resin, polyester resin, epoxy resin or urethane resin having a thermosetting property, is preferred, and from the viewpoint of excellent adhesion to a substrate, and since a fluororesin is less likely to contaminate the cured resin layer, a polyester resin or an acrylic resin is more preferred, and a polyester resin is particularly preferred.

<Polyester resin>

A polyester resin is a polymer wherein a unit derived from a polyvalent carboxylic acid compound and a unit derived from a polyhydric alcohol compound are linked by an ester bond, and it may further have units other than these two types of units (for example, units derived from a hydroxycarboxylic acid compound, etc.).

A terminal of a polymer chain of the polyester resin is a monovalent unit, and in a case where a terminal unit is a unit derived from a polyvalent carboxylic acid compound, such a terminal unit has a carboxy group, and in a case where a terminal unit is a unit derived from a polyhydric alcohol compound, such a terminal unit has a hydroxy group.

Units other than the terminal units are divalent or higher valent units, and a linear polymer is composed solely of divalent units except for the terminal units. That is, the linear polyester resin is, with the exception of the terminal units, composed solely of divalent units derived from a polyvalent carboxylic acid compound and divalent units derived from a polyhydric alcohol compound. A branched polyester resin has at least one trivalent or higher valent unit and is composed substantially solely of divalent units except for such a trivalent or higher valent unit and terminal units. The trivalent or higher valent unit may, for example, be a unit having a hydroxy group removed from each of at least three carboxy groups in a trivalent or higher polyvalent carboxylic acid compound, or a unit having a hydrogen atom removed from each of at least three hydroxy groups in a trihydric or higher polyhydric alcohol compound.

Hereinafter, units derived from a polyvalent carboxylic acid compound will be referred to also as "polyvalent carboxylic acid units", and units derived from a polyhydric alcohol compound will be referred to also as "polyhydric alcohol units".

As the polyester resin, a linear polymer or a branched polymer having a small number of branches is preferred, and a linear polymer is particularly preferred. A branched polymer having many branches tends to have a high softening point and a high melting temperature, and therefore, in a case where the polyester resin is a branched polymer, the softening temperature is preferably at most 200°C. The polyester resin is preferably one which is a solid at room temperature and has a softening point of from 100 to 150°C.

The number average molecular weight of the polyester resin is preferably at most 5,000, whereby the melt viscosity of the coating film can be made properly low. The mass average molecular weight of the polyester resin is preferably from 2,000 to 20,000, more preferably from 2,000 to 10,000, whereby the melt viscosity of the coating film can be made properly low. The polyester resin is more preferably one which has a number average molecular weight of at most 5,000 and a mass average molecular weight of form 2,000 to 20,000, particularly preferably one which has a number average molecular weight of at most 5,000 and a mass average molecular weight of from 2,000 to 10,000.

The polyester resin has a reactive group capable of reacting with the curing agent (D). At least a portion of a terminal unit of a polymer chain of the polyester resin is preferably a monovalent polycarboxylic acid unit or a monovalent polyhydric alcohol unit, and in the former case, a free carboxy group in the unit will function as a reactive group, and in the latter case, a free hydroxy group in the unit will function as a reactive group. A unit having a reactive group may be a unit other than the terminal unit. For example, a divalent polyhydric alcohol unit derived from a polyhydric alcohol compound having at least three hydroxy groups, is a unit having a free hydroxy group, and therefore, the polyester resin may have a divalent or higher valent unit having such a reactive group.

The reactive groups in the polyester resin are preferably hydroxy groups, since the cured film will be excellent in water resistance, alkali resistance and acid resistance. The polyester resin usually has hydroxy groups and carboxy groups, and as the polyester resin, preferred is one mainly containing hydroxy groups.

The hydroxy value of the polyester resin is preferably from 20 to 100 mgKOH/g, particularly preferably from 20 to 80 mgKOH/g. The acid value is preferably from 1 to 80 mgKOH/g, and particularly preferably from 3 to 50 mgKOH/g.

The hydroxy value and acid value are measured in accordance with JIS K 0070 (1992 year edition).

As the polyester resin, a polyester resin having units derived from a $C_{8-15}$ aromatic polyvalent carboxylic acid compound and units derived from a $C_{2-10}$ polyhydric alcohol compound, is preferred, from such a viewpoint that when the cured film has a double-layered structure, it is excellent in adhesion to the fluororesin layer, that the cured film is excellent in impact resistance, and that dispersibility of the pigment (E), etc. is excellent.

The polyvalent carboxylic acid units are preferably units derived from a $C_{8-15}$ aromatic polyvalent carboxylic acid compound. A $C_{8-15}$ aromatic polyvalent carboxylic acid compound is a compound having an aromatic ring and at least two carboxy groups, and the carboxy groups are bonded to carbon atoms of the aromatic ring. Further, it may be an anhydride having such a structure that two carboxy groups are dehydrated.

The aromatic ring is preferably a benzene ring or a naphthalene ring, particularly preferably a benzene ring. In the case of a benzene ring, there may be two such rings in one molecule.

The number of carboxy groups in the aromatic polyvalent carboxylic acid compound is preferably from 2 to 4, particularly preferably 2.

The $C_{8-15}$ aromatic polyvalent carboxylic acid compound may, for example, be phthalic acid, isophthalic acid, terephthalic acid, naphthalene dicarboxylic acid, trimellitic acid, pyromellitic acid, phthalic anhydride, etc.

The polyvalent carboxylic acid units are preferably units derived from isophthalic acid, from such a viewpoint that the cured film will be excellent in weather resistance.

The polyhydric alcohol units are preferably units derived from a $C_{2-10}$ polyhydric alcohol compound. The $C_{2-10}$ polyhydric alcohol compound is a compound having at least two hydroxy groups. The polyhydric alcohol compound is preferably an aliphatic polyhydric alcohol or an alicyclic polyhydric alcohol, particularly preferably an aliphatic polyhydric alcohol. The number of hydroxy groups in the polyhydric alcohol compound is preferably from 2 to 4, particularly preferably 2.

The $C_{2-10}$ polyhydric alcohol compound may, for example, be ethylene glycol, diethylene glycol, triethylene glycol, 1,2-propanediol, 1,3-propanediol, 1,3-butanediol, 1,4-butanediol, 1,5-pentanediol, neopentyl glycol, spiro glycol, 1,10-decanediol, 1,4-cyclohexane dimethanol, trimethylolethane, trimethylolpropane, glycerine, pentaerythritol, etc.

The polyhydric alcohol units are preferably units derived from a $C_{3-8}$ polyhydric alcohol, particularly preferably units derived from a $C_{4-6}$ polyhydric alcohol, in view of excellent adhesion to the substrate and also in view of excellent flexibility whereby even when a heat history (thermal cycling) is applied, delamination of the fluororesin layer is less likely to occur in a case where the cured film has a double-layered structure.

As the polyhydric alcohol, for example, neopentyl glycol, 1,2-pentanediol, 1,5-pentanediol or trimethylolpropane is preferred, and in view of easy availability, neopentyl glycol or trimethylolpropane is more preferred.

The polyester resin can be produced by a known method for producing a polyester resin for a powder coating material, using an aromatic polyvalent carboxylic acid compound and a polyhydric alcohol compound as raw materials. For example, after esterification or ester exchange reaction of the raw materials at from 200 to 280°C, a polycondensation reaction is conducted at from 230 to 290°C by using a catalyst under reduced pressure, followed by a depolymerization reaction with an alcohol component, to obtain the polyester resin.

The polyester resin should preferably have a suitable ester group concentration and an aromatic ring concentration, in order to facilitate formation of a cured film of a double layer structure by layer-separation of the fluororesin layer and the other resin layer in the melting and curing process of the powder coating material.

The ester group concentration is one having the content of ester groups in the polyester resin represented by mass%, and can be obtained from the following formula (1).

$$\text{Ester group concentration (mass\%)} = 2m/[(a + b) \times m + a] \qquad (1)$$

m: an average value of the number of units in the polyester resin, as calculated from an average value of the molecular weight of each unit and a value of the number average molecular weight of the polyester resin.

a: an average value of the number of carbon atoms in the polyhydric alcohol units.

b: an average value of the number of carbon atoms in the polyvalent carboxylic acid units.

The ester group concentration in the polyester resin is preferably from 20 to 60 mass%, more preferably from 25 to 50 mass%, particularly preferably from 30 to 40 mass%.

The aromatic ring concentration is one having the content of aromatic rings in the polyester resin represented by mmoL/g, and can be obtained from the following formula (2).

Aromatic ring concentration (mmoL/g) = [(total number of aromatic rings in the raw materials used to obtain the polyester resin (moL))/(total weight of the raw materials used to obtain the polyester resin (g))] $\times$ 1,000

The aromatic ring concentration in the polyester resin is preferably from 20 to 35 mmoL/g, more preferably from 22 to 34 mmoL/g, particularly preferably from 25 to 33 mmoL/g.

Commercial products of the polyester resin may, for example, be "CRYLCOAT (registered trademark) 4642-3" and "CRYLCOAT (registered trademark) 4890-0", manufactured by Nihon Cytec Industries Inc., "GV-250", "GV-740 " and "GV-175", manufactured by Nippon U-PICA Co., Ltd., etc.

<Acrylic resin>

The acrylic resin is a polymer having units derived from a (meth)acrylate, and it has reactive groups such as carboxy groups, hydroxy groups, sulfo groups, etc. The acrylic resin is excellent in dispersibility of the pigment (E).

The glass transition temperature of the acrylic resin is preferably from 30 to 60°C. When the glass transition temperature is at least the above lower limit value, blocking is less likely to occur. When the glass transition temperature is at most the above upper limit value, the cured film will be excellent in surface smoothness.

The number average molecular weight of the acrylic resin is preferably from 5,000 to 100,000, particularly preferably from 30,000 to 100,000. When the number average molecular weight of the acrylic resin is at least the above lower limit value, blocking is less likely to occur. When the number average molecular weight of the acrylic resin is at most the above upper limit value, the cured film will be excellent in surface smoothness.

The mass average molecular weight of the acrylic resin is preferably from 6,000 to 150,000, more preferably from 40,000 to 150,000, particularly preferably from 60,000 to 150,000. When the mass average molecular weight of the acrylic resin is at least the above lower limit value, blocking is less likely to occur. When the mass average molecular weight of the acrylic resin is at most the above upper limit value, the cured film will be excellent in surface smoothness.

In a case where the acrylic resin has carboxy groups, the acid value of the acrylic resin is preferably from 150 to 400 mgKOH/g. When the acid value of the acrylic resin is at least the above lower limit value, there will be a dispersibility-improving effect for the pigment (E). When the acid value of the acrylic resin is at most the above upper limit value, the cured film will be excellent in moisture resistance.

Commercial products of the acrylic resin may, for example, be "FINEDIC (registered trademark) A-249", " FINEDIC (registered trademark) A-251" and " FINEDIC (registered trademark) A-266", manufactured by DIC Corporation, "ALMATEX (registered trademark) PD6200" and "ALMATEX (registered trademark) PD7310", manufactured by Mitsui Chemicals, "SANPEX PA-55" manufactured by Sanyo Chemical Industries, Ltd., etc.

<Epoxy resin>

The epoxy resin is a compound (prepolymer) having at least two epoxy groups in the molecule.

Commercial products of the epoxy resin may, for example, be "Epikote (registered trademark) 1001", "Epikote (registered trademark) 1002" and "Epikote (registered trademark) 4004P", manufactured by Mitsubishi Chemical Corporation, "EPICLON (registered trademark) 1050" and "EPICLON (registered trademark) 3050", manufactured by DIC Corporation, "EPOTOHTO (registered trademark) YD-012" and "EPOTOHTO (registered trademark) YD-014", manufactured by Nippon Steel Sumitomo Metals Chemical Co., Ltd., "Denacol (registered trademark) EX-711", manufactured by Nagase ChemteX Corporation, " EHPE3150 " manufactured by Daicel Chemical Industries, Ltd., etc.

<Urethane resin>

The urethane resin is a mixture obtained by mixing, or a resin obtained by reacting, a polyol (acrylic polyol, polyester polyol, polyether polyol, propylene glycol, propylene oxide, etc.) and an isocyanate compound. It is preferred to use a powder coating material composed of a powdery polyol (acrylic polyol, polyester polyol, polyether polyol) and a powdery isocyanate.

(Curing catalyst (G))

The curing catalyst (G) is one to accelerate the curing reaction and to impart good chemical properties and physical properties to a cured film.

In a case where a blocked isocyanate curing agent (D1) is to be used, the curing catalyst (G) is preferably a tin catalyst (tin octylate, tributyltin laurate, dibutyltin dilaurate, etc.).

As the curing catalyst, one type may be used alone, or two or more types may be used in combination.

(Other components (H))

Either one or both of the composition ($\alpha$) and the composition ($\beta$) may contain other components (H), as the case requires.

Other components (H) may, for example, be a ultraviolet absorber, a light stabilizer, a matting agent (ultrafine synthetic silica, etc.), a surfactant (nonionic surfactant, cationic surfactant or anionic surfactant), a leveling agent, a surface modifier (to improve the surface smoothness of the cured film), a degassing agent (having a function to discharge air included in the powder, a blocking agent, moisture, etc. discharged from the curing agent (D) out of the coating film, so as not to remain inside of the cured film, and it is usually solid, but becomes to have a very low viscosity when melted), a filler, a heat stabilizer, a thickener, a dispersing agent, an antistatic agent, a rust inhibitor, a silane coupling agent (excluding the compound (C2)), an antifouling agent, a low-pollution treatment agent, etc.

<Ultraviolet absorber>

In the powder coating material (II), when the composition ($\alpha$) being the material for the powder (X) contains a ultraviolet absorber, the ultraviolet absorber tends to be concentrated in the fluororesin layer. Therefore, the amount of ultraviolet rays passing through the fluororesin layer and reaching the other resin layer, is reduced, whereby the deterioration of the other resin layer is suppressed, and it is possible to avoid a problem that the fluororesin layer is peeled from the other resin layer.

In the present invention, the ultraviolet absorber may be incorporated, not only in the composition ($\alpha$) being the material for the powder (X), but also in the composition ($\beta$) being the material for the powder (Y) so that the ultraviolet absorber is concentrated also in the other resin layer. However, from the viewpoint of suppressing the cost, the ultraviolet absorber should better be not present in the other resin layer as far as possible, i.e. should not be incorporated in the composition ($\beta$) being the material for the powder (Y).

In a case where the cured film has a double-layered structure, in order to let the ultraviolet absorber be concentrated in the fluororesin layer in the melting and curing process of the powder coating material, it is preferred to select a ultraviolet absorber which tends to be concentrated in the fluororesin layer, in consideration of the physical properties, etc. of the ultraviolet absorber. For example, as between a lipophilic ultraviolet absorber and a hydrophilic ultraviolet absorber, the lipophilic ultraviolet absorber is more easily be concentrated in the fluororesin layer. Further, the affinity to the fluororesin (A) may be different depending upon a difference in the type (the difference in the chemical structure) or the physical properties (molecular weight, melting point, boiling point, etc.) of the ultraviolet absorber.

As the ultraviolet absorber, either an organic ultraviolet absorber or an inorganic ultraviolet absorber may be used.

As the ultraviolet absorber, one type may be used alone, or two or more types may be used in combination.

The organic ultraviolet absorber may, for example, be a salicylate-type ultraviolet absorber, a benzotriazole ultraviolet absorber, a benzophenone ultraviolet absorber, a cyanoacrylate ultraviolet absorber, etc.

As the organic ultraviolet absorbent, a compound having a molecular weight of from 200 to 1,000 is preferred. When the molecular weight is at least 200, it is less likely to volatilize in the melting and curing process of the powder coating material and can remain in the cured film. When the molecular weight is at most 1,000, it can remain in the fluororesin layer in the case where the cured film has the double-layered stru ctu re.

As the organic ultraviolet absorbent, a compound having a melting point of from 50 to 150°C is preferred. When the melting point is at least 50°C, it is less likely to volatilize in the melting and curing process of the powder coating material, and can remain in the cured film. When the melting point is at most 150°C, it tends to be readily melted in the melting and curing process of the powder coating material, and can remain in the fluororesin layer in the case where the cured film has a double-layered structure.

As the organic ultraviolet absorber, a compound having a volatilization temperature of from 180 to 400°C is preferred, and a compound having a volatilization temperature of from 220 to 350°C is particularly preferred. A temperature condition of from 150 to 220°C is required in the melting and curing process of the powder coating material, and when the volatilization temperature is within the above range, the organic ultraviolet absorber will be scarcely volatilized and is likely to remain in the fluororesin layer in the case where the cured film has a double-layered structure.

Commercial products of the organic ultraviolet absorber may, for example, be "Tinuvin (registered trademark) 326" (molecular weight: 315.8, melting point: 139°C), "Tinuvin (registered trademark) 405" (molecular weight: 583.8 , melting point: 74 to 77°C), "Tinuvin (registered trademark) 460" (molecular weight: 629.8, melting point: 93 to 102°C), "Tinuvin (registered trademark) 900" (molecular weight: 447.6, melting point: 137 to 141°C) and "Tinuvin (registered trademark) 928" (molecular weight: 441.6, melting point: 109 to 113°C), manufactured by BASF, "Sanduvor (registered trademark) VSU powder" (molecular weight: 312.0, melting point: 123 to 127°C) manufactured by Clariant Corporation, "Hastavin (registered trademark) PR-25 Gran" (molecular weight: 250.0, melting point: 55 to 59°C) manufactured by Clariant Corporation, etc.

The inorganic ultraviolet absorber may, for example, be a filler-type inorganic ultraviolet absorber including a ultraviolet absorbing oxide (zinc oxide, cerium oxide or the like).

The inorganic ultraviolet absorber is preferably composite particles of zinc oxide and titanium oxide, composite particles of cerium oxide and titanium oxide, composite particles of zinc oxide and cerium oxide, composite particles of titanium oxide, zinc oxide and cerium oxide, etc.

<Light stabilizer>

The light stabilizer is one to protect a resin (fluororesin (A) or other resin (F)) in the cured film from ultraviolet rays.

In the powder coating material (II), when the composition ($\beta$) being the material for the powder (Y) contains a light stabilizer, the light stabilizer will be present in the other resin layer. Therefore, deterioration of the other resin layer by ultraviolet rays passing through the fluororesin layer and reaching the other resin layer, will be prevented, and it is possible to avoid a problem that the fluororesin layer is peeled from the other resin layer.

In the present invention, a light stabilizer may be incorporated not only in the composition ($\beta$) being the material for the powder (Y), but also in the composition ($\alpha$) being the material for the powder (X), but from the viewpoint of reducing the cost, the light stabilizer should preferably be not present in the fluororesin layer as far as possible, i.e. should not to be contained in the composition ($\alpha$) being the material for the powder (X).

The light stabilizer is preferably a hindered amine light stabilizer having a molecular weight of from 300 to 5,000 and a melting point of from 50 to 250°C, from such a viewpoint that it can easily be concentrated in the other resin layer in the melting and curing process of the powder coating material. A hindered amine light stabilizer having a molecular weight of from 400 to 4,000 and a melting point of from 60 to 200°C is more preferred, from such a viewpoint that it will be uniformly diffused in the composition during kneading.

As the light stabilizer, one type may be used alone, or two or more types may be used in combination.

Commercial products of the hindered amine light stabilizer may, for example, be "Tinuvin (registered trademark) 111 FDL" (molecular weight: 2,000 to 4,000, melting point: 63°C), "Tinuvin (registered trademark) 144" (molecular weight: 685, melting point: 146 to 150°C) and "Tinuvin (registered trademark) 152" (molecular weight: 756.6, melting point: 83 to 90°C), manufactured by BASF, "Sanduvor (registered trademark) 3051 powder" (molecular weight: 364.0, melting point: 225°C), "Sanduvor (registered trademark) 3070 powder" (molecular weight: 1,500, melting point: 148°C) and "VP Sanduvor (registered trademark) PR-31" (molecular weight: 529, melting point: 120 to 125°C), manufactured by Clariant Corporation, etc.

(Composition ($\alpha$))

The content of the curing agent (D) in the composition ($\alpha$) is preferably from 1 to 50 parts by mass, particularly preferably from 3 to 30 parts by mass, to 100 parts by mass of the fluororesin (A) (the total of the fluorooresin (A) and other resin (F) in a case where other resin (F) is contained) in the composition ($\alpha$).

In a case where the curing agent (D) is a blocked isocyanate curing agent (D1), the content of the blocked isocyanate curing agent (D1) in the composition ($\alpha$) is preferably in such an amount that the molar ratio of the isocyanate group to the hydroxy group in the composition ($\alpha$) would be from 0.05 to 1.5, particularly preferably in such an amount that said molar ratio would be from 0.8 to 1.2. When the molar ratio is at least the lower limit value in the above range, the curing degree of the coating material will be high, and the adhesion to the other resin layer, the hardness and chemical resistance of the cured film, etc. will be excellent. When the molar ratio is at most the upper limit value in the above range, the cured film is unlikely to become brittle, and the cured film will be excellent in heat resistance, chemical resistance, moisture resistance, etc.

In a case where the composition ($\alpha$) contains a curing catalyst (G), the content of the curing catalyst (G) in the composition ($\alpha$) is preferably from 0.0001 to 10 parts by mass, to 100 parts by mass in total of the solid content other than the pigment (E). When the content of the curing catalyst (G) is at least the above lower limit value, the catalytic effect can be sufficiently obtained. When the content of the curing catalyst (G) is at most the above upper limit value, a gas such as air included in the powder coating material in the melting and curing process of the powder coating material, will easily be released, and decrease in the heat resistance, weather resistance and water resistance of the cured film caused by the remaining gas, will be less.

The total content of other components (H) in the composition ($\alpha$) is preferably at most 45 mass%, particularly preferably at most 30 mass%, in the composition ($\alpha$) (100 mass%).

When the composition ($\alpha$) contains other resin (F), the content of other resin (F) in the composition ($\alpha$) is preferably from 20 to 80 parts by mass, particularly preferably from 25 to 75 parts by mass, to 100 parts by mass of the total of the fluororesin (A) and other resin (F) in the composition ($\alpha$). When the content of other resin (F) is at least the above lower limit value, it is possible to reduce the cost of the cured film. When the content of other resin (F) is at most the above upper limit value, the cured film will be excellent in weather resistance.

(Composition ($\beta$))

In a case where the composition ($\beta$) contains a curing agent (D), the content of the curing agent (D) in the composition ($\beta$) is preferably from 1 to 50 parts by mass, particularly preferably from 3 to 30 parts by mass, to 100 parts by mass of other resin (F) in the composition ($\beta$).

In a case where the curing agent (D) is a blocked isocyanate curing agent (D1), the content of the blocked isocyanate curing agent (D1) in the composition ($\beta$) is preferably in such an amount that the molar ratio of the isocyanate group to the hydroxy group in the composition ($\beta$) would be from 0.05 to 1.5, particularly preferably in such an amount that said molar ratio would be from 0.8 to 1.2. When the molar ratio is at least the lower limit value in the above range, the curing degree of the coating material will be high, and the adhesion to the other resin layer, the hardness and chemical resistance of the cured film, etc. will be excellent. When the molar ratio is at most the upper limit value in the above range, the cured film is unlikely to become brittle, and the cured film will be excellent in heat resistance, chemical resistance, moisture resistance, etc.

In a case where the composition ($\beta$) contains a curing catalyst (G), the content of the curing catalyst (G) in the composition ($\beta$) is preferably from 0.0001 to 10 parts by mass, to 100 parts by mass in total of the solid content other than the pigment (E). When the content of the curing catalyst is at least the above lower limit value, the catalytic effect can be sufficiently obtained. When the content of the curing catalyst is at most the above upper limit value, a gas such as air included in the powder coating material in the melting and curing process of the powder coating material, will easily be released, and decrease in the heat resistance, weather resistance and water resistance of the cured film caused by the remaining gas, will be less.

The total content of other components (H) in the composition ($\beta$) is preferably at most 45 mass%, particularly preferably at most 30 mass%, in the composition ($\beta$) (100 mass%).

The total content of the pigment (E) in the composition ($\alpha$) and the pigment (E) in the composition ($\beta$) is preferably from 20 to 200 parts by mass, particularly preferably from 50 to 150 parts by mass, to 100 parts by mass of the total of the fluororesin (A) (the total of the fluororesin (A) and other resin (F) in a case where other resin (F) is contained) in the composition ($\alpha$) and other resin (F) in the composition ($\beta$).

(Mechanism of action)

The powder coating material as described above contains a fluororesin (A), whereby it is possible to form a cured film excellent in weather resistance. Particularly when the powder (X) contained in the powder coating material (I) contains other resin (F) which can be layer-separated without being compatible with the fluororesin (A), it is possible to form, by one coating, a cured film wherein a fluororesin layer composed mainly of a cured product of the fluororesin (A) and a layer of other resin composed mainly of other resin (F) or its cured product, are layer-separated. The layer of other resin is disposed on the substrate side, and the fluororesin layer is disposed on the air side, whereby the cured film will be excellent in weather resistance. Further, in a case where the powder (Y) contained in the powder coating material (II) contains other resin (F) which can be layer-separated without being compatible with the fluororesin (A), it is possible to form, by one coating, a cured film wherein a fluororesin layer composed mainly of a cured product of the fluororesin (A) and a layer of other resin composed mainly of other resin (F) or its cured product, are layer-separated. The layer of other resin is disposed on the substrate side, and the fluororesin layer is disposed on the air side, whereby the cured film will be excellent in weather resistance.

Further, in the above described powder coating material, the fluororesin (A) has carboxy groups, or has alkoxysilyl groups and urethane bonds, whereby it is possible to form a cured film having few voids (gaps), as will be described below.

<When fluororesin (A) has carboxy groups>

1. The fluororesin (A) having carboxy groups has a low melt viscosity as compared with a hydroxy group-containing fluororesin. Therefore, when the powder coating material is melted to form a coating film, air present in the powder coating material or a gas generated during the reaction of a curing agent, is readily released from the coating film. As a result, voids are less likely to remain in the cured film.

2. The fluororesin (A) having carboxy groups has high affinity with a pigment (E), as compared with a hydroxy group-containing fluororesin. Therefore, dispersibility of the pigment in the fluororesin (A) is improved, and the pigment is scarcely agglomerated in the cured film. As a result, voids are less likely to remain between the pigment and the fluororesin (A).

<When fluororesin (A) has alkoxysilyl groups and urethane bonds>

1. The fluororesin (A) having urethane bonds has a low melt viscosity as compared with a hydroxy group-containing fluororesin. Therefore, when the powder coating material is melted to form a coating film, air present in the powder coating material or a gas generated during the reaction of a curing agent, is readily released from the coating film. As a result, voids are less likely to remain in the cured film.

2. The fluororesin (A) having alkoxysilyl groups has high affinity with a pigment (E), as compared with a hydroxy group-containing fluororesin. Therefore, dispersibility of the pigment in the fluororesin (A) is improved, and the pigment is scarcely agglomerated in the cured film. As a result, voids are less likely to remain between the pigment and the fluororesin (A).

[Process for producing powder coating material]

The process for producing a powder coating material of the present invention comprises the following step (a), step (b) and step (c) in the case of the powder coating material (I).

(a) A step of melt-kneading a mixture which comprises a hydroxy group-containing fluororesin (B), an acid anhydride (C1) or a compound (C2), and a curing agent (D), and which may contain, as the case requires, a pigment (E), other resin (F), a curing catalyst (G) and other components (H), to obtain a kneaded product made of the composition ($\alpha$).
(b) A step of pulverizing the kneaded product made of the composition ($\alpha$) to obtain a powder (X).
(c) As the case requires, a step of classifying the powder (X).

The process for producing a powder coating material of the present invention comprises, in the case of the powder coating material (II), the following step (a), the step (b), step (c), step (a2), step (b2), step (c2) and step (d).

(a) A step of melt-kneading a mixture which comprises a hydroxy group-containing fluororesin (B), an acid anhydride (C1) or the compound (C2), and a curing agent (D), and which may contain, as the case requires, a pigment (E), other resin (F), a curing catalyst (G) and other components (H), to obtain a kneaded product made of the composition ($\alpha$).
(b) A step of pulverizing the kneaded product made of the composition ($\alpha$) to obtain a powder (X).
(c) As the case requires, a step of classifying the powder (X).

(a2) A step of melt-kneading a mixture which contains other resin (F) and no fluororesin (A), and which may contain, as the case requires, a curing agent (D), a pigment (E), a curing catalyst (G) and other components (H), to obtain a kneaded product made of the composition ($\beta$).
(b2) A step of pulverizing the kneaded product made of the composition ($\beta$) to obtain a powder (Y).
(c2) As the case requires, a step of classifying the powder (Y).

(d) A step of dry-blending the powder (X) and the powder (Y).

(Step (a))

The respective components are mixed to prepare a mixture, and then, the mixture is melt-kneaded to obtain a kneaded product in which the respective components are homegenized.
By reacting hydroxy groups in the hydroxy group-containing fluororesin (B) with the acid anhydride (C1) or the compound (C2) during the melt-kneading, some or all of the hydroxy groups are esterified to introduce carboxy groups.
The respective components are preferably preliminarily pulverized into a powder form.

The apparatus to be used for mixing may, for example, be a high speed mixer, a V type mixer, an inversion mixer, etc.

The apparatus to be used for melt-kneading may, for example, be a single screw extruder, a twin-screw extruder, a planetary gear, etc.

The kneaded product is preferably pelletized, after cooling.

The melt-kneading temperature is at least the glass transition temperature of the hydroxy group-containing fluororesin (B) and lower than the reaction temperature of the curing agent (D). Specifically, it is preferably from 80 to 140°C. When the melt-kneading temperature is at least the above lower limit value, the hydroxy group-containing fluororesin (B) and the acid anhydride (C1) or the compound (C2) can be sufficiently contacted in a molten state, whereby the reaction proceeds sufficiently. When the melt-kneading temperature is at most the above upper limit value, the reaction of the fluororesin (A) and the hydroxy group-containing fluororesin (B) with the curing agent (D) can be sufficiently suppressed.

As the anhydride (C1) or the compound (C2), it is preferred to select one which can be melted at the above temperature range.

The melt-kneading time is preferably from 10 seconds to 20 minutes, particularly preferably from 15 seconds to 10 minutes. When the melt-kneading time is at least the above lower limit value, the reaction of hydroxy groups in the hydroxy group-containing fluororesin (B) with the acid anhydride (C1) or the compound (C2) will sufficiently proceed. When the melt-kneading time is at most the above upper limit value, the reaction of the fluororesin (A) and the hydroxy group-containing fluororesin (B) with the curing agent (D) can be sufficiently suppressed.

The amount of the acid anhydride (C1) is preferably from 0.1 to 2.0 mol, particularly preferably from 0.2 to 1.5 mol, relative to 1 mol of the hydroxy groups in the hydroxy group-containing fluororesin (B). The amount of the compound (C2) is preferably from 0.03 to 0.2 mol, particularly preferably from 0.05 to 0.15 mol, relative to 1 mol of the hydroxy groups in the hydroxy group-containing fluororesin (B). When the amount of the acid anhydride (C1) or the compound (C2) is at least the above lower limit value, the hydroxy groups in the hydroxy group-containing fluororesin (B) will be sufficiently converted to carboxy groups, or alkoxysilyl groups and urethane bonds, and it is possible to obtain a fluororesin (A) having a sufficiently low melt viscosity and being excellent in affinity with the pigment (E). When the amount of the acid anhydride (C1) or the compound (C2) is at most the above upper limit value, the amount of unreacted acid anhydride (C1) or unreacted compound (C2) can be suppressed, and an influence of the acid anhydride (C1) or the compound (C2) to the cured film can be suppressed.

(Step (a2))

The respective components are mixed to prepare a mixture, and then, the mixture is melt-kneaded to obtain a kneaded product in which the respective components are homogenized.

The respective components are preferably preliminarily pulverized into a powder form.

The apparatus to be used for mixing, and the apparatus to be used for melt-kneading, may be the same ones as mentioned above in step (a).

The kneaded product is preferably pelletized after cooling.

(Steps (b) and (b2))

The apparatus to be used for pulverization may be a pulverizer, such as a pin mill, a hammer mill, a jet mill, etc.

(Steps (c) and (c2))

In order to remove a powder having a too large particle size or a powder having a too small particle size, it is preferred to carry out classification after the pulverization. In the classification, it is preferred to remove at least either one of particles having a particle size of less than 10 μm and particles having a particle size exceeding 100 μm.

The classification method may, for example, be a method by sieving, an air classification method, etc.

The average particle size of the powder (X) and the powder (Y) is, for example, preferably from 25 to 50 μm at a 50% average volume particle size distribution. The measurement of the particle size of the powder is usually carried out by using a particle size measuring device of e.g. a system to capture the potential change during passage through pores, a laser diffraction system, an image determination system, or a sedimentation rate measuring system.

(Step (d))

The apparatus to be used for dry-blending, may, for example, be a high-speed mixer, a double cone mixer, a kneader, a tumbler mixer, a mixing shaker, a drum shaker, a rocking shaker, etc.

(Mechanism of action)

In the above described process for producing a powder coating material of the present invention, hydroxy groups in the hydroxy group-containing fluororesin (B) are reacted with the acid anhydride (C1) or the compound (C2) during the melt-kneading, to obtain the fluororesin (A), whereby the fluororesin (A) is less likely to undergo gelation for the following reasons.

1. As the reaction is conducted in the kneading apparatus, a thermal history is less as compared with the case where the reaction is conducted in a solvent, whereby the molecular weight of the fluororesin (A) is less likely to rise. As a result, the fluororesin (A) is less likely to undergo gelation.
2. There is no desolvation process, whereby the fluororesin (A) is less likely to undergo gelation.

In a cured film formed from a powder coating material containing little amount of a gelled fluororesin, air present in the powder coating material or gas generated during the reaction of a curing agent, will be readily released from the cured film and is less likely to form voids (gaps).
Thus, in the process for producing a powder coating material of the present invention, it is possible to produce a powder coating material which contains a fluororesin (A) having carboxy groups, or having alkoxysilyl groups and urethane bonds and which scarcely contains a gelled fluororesin, i.e. a powder coating material capable of forming a cured film with few voids.
Further, in the process for producing a powder coating material of the present invention as described above, it is possible to produce a powder coating material containing the fluororesin (A), i.e. a powder coating material capable of forming a cured film excellent in weather resistance.

[Process for producing coated article]

The process for producing a coated article is a process for producing a coated article having a cured film on the surface of a substrate, and comprises the following step (e) and step (f).

(e) A step of coating a substrate with the powder coating material of the present invention, to form a coating film made of a melt of the powder coating material.
(f) A step of curing the coating film to form a cured film.

(Step (e))

The powder coating material of the present invention is applied to a substrate to form a coating film made of a melt of the powder coating material on the substrate. In a case where the cured film has a double-layered structure, in the coating film, an upper layer composed mainly of a melt of the fluororesin (A), and a lower layer composed mainly of a melt of other resin (F), are layer-separated, and reactive components in each layer undergo a curing reaction.

<Substrate>

The material for the substrate is preferably a metal such as aluminum, iron or magnesium.
The shape, size, etc. of the substrate are not particularly limited.

<Method for forming coating film>

The coating film made of a melt of the powder coating material, may be formed at the same time as coating of the powder coating material to the substrate, or may be formed by depositing a powder of the powder coating material on the substrate, and then by heating and melting the powder on the substrate.
Almost at the same time as the powder coating material is heated and melted, the curing reaction of reactive components in the composition will be started, and therefore, it is necessary to carry out the heating and melting of the powder coating material, and the deposition on the substrate, almost simultaneously, or to carry out the deposition of the powder coating material on the substrate, followed by heating and melting of the powder coating material.
In order to heat and melt the powder coating material and to maintain the molten state for a predetermined period of time, the heating temperature (hereinafter referred to also as the "baking temperature") and the heating retention time (hereinafter referred to also as the "baking time") are suitably set depending upon the type and composition of the raw material components of the powder coating material, the thickness of the desired cured film, etc. Particularly, the baking temperature is preferably set depending on the reaction temperature of the curing agent (D). For example, in the case of using a blocked polyisocyanate curing agent (D1) as the curing agent (D), the baking temperature is preferably from 170 to 210°C. The baking time is preferably from 5 to 120 minutes, particularly preferably from 10 to 60 minutes.

<Coating method>

The coating method may, for example, be an electrostatic coating method, an electrostatic spraying method, an electrostatic immersion method, a misting method, a fluidized bed dipping method, a blowing method, a spraying method, a thermal spraying method, a plasma spraying method, etc. An electrostatic coating method using a powder coating gun is preferred, in that the coating film will be excellent in surface smoothness even when it is made thin, and further in that the cured film will be excellent in hiding properties.

The powder coating gun may be a corona charging type spray gun or a friction charging type spray gun. The corona charging type coating gun is one to spray the powder coating material by corona discharge treatment. The frictional charging type coating gun is one to spray the powder coating material by triboelectric charging treatment.

The ejection amount of the powder coating material from the powder coating gun is preferably from 50 to 200 g/min.

The distance from the tip of the gun portion of the powder coating gun to the substrate, is preferably from 150 to 400 mm from the viewpoint of coating efficiency.

In the case of using the corona charging type coating gun, the load voltage applied to components constituting the powder coating material by corona discharge treatment is preferably from -50 to -100 kV, and from the viewpoint of excellent coating efficiency (ratio of deposition of the powder coating material on the substrate) and appearance of the coating film, it is more preferably from -60 to -80 kV.

In the case of using the frictional charging type coating gun, the internally generated current value of the powder coating material by triboelectric charging treatment is preferably from 1.0 to 8.0 $\mu$A from the viewpoint of excellent coating efficiency and appearance of the coating film.

In a case where the electrostatic coating method is to be industrially implemented, for example, a non-coated mirror is set and a grounded conductive horizontal belt conveyor for grounding is installed in a coating chamber, and at an upper portion of the coating chamber, a gun is set. The coating pattern width is preferably from 50 to 500 mm, the moving speed of the gun is preferably from 1 to 30 m/min, the conveyor speed is preferably from 1 to 50 m/min, and suitable conditions may be selected within the above ranges depending upon the particular purpose.

From such a viewpoint that it is possible to form a relatively thick cured film, the coating method is preferably a fluidized bed dipping method.

In the fluidized bed dipping method, it is preferred that in a fluidized bed vessel in which the powder coating material flows as carried by a gas such as air, a substrate having the surface heated to a temperature of at least the melting temperature of the powder coating material, is dipped to let the powder deposit on the surface of the substrate and at the same time to let the powder be melted, to form a coating film with a predetermined thickness on the substrate, whereupon the coated substrate is taken out from the fluidized bed vessel, and as the case requires, the molten state of the coating film is maintained for a predetermined time, followed by cooling to cool and cure the molten state coating film, to obtain the substrate having a cured film formed.

The temperature in the fluidized bed vessel in the fluidized bed dipping method, is preferably from 15 to 55°C, and the temperature of the gas such as air blown into the fluidized bed vessel in order to fluidize the powder is also preferably from 15 to 55°C. The temperature of at least the surface of the substrate at the time of being dipped in the fluidized bed vessel is preferably from 300 to 450°C, and the time for dipping the substrate in the fluidized bed vessel is preferably from 1 to 120 seconds. The substrate taken out from the fluidized bed vessel is preferably maintained at a temperature of from 150 to 250°C for from 1 to 5 minutes.

(Step (f))

The molten state coating film is cooled to room temperature (20 to 25°C) to form a cured film.

Cooling after baking may be either rapid cooling or slow cooling, but slow cooling is preferred, whereby interfacial peeling due to the difference in cure shrinkage between the fluororesin layer and the other resin layer is less likely to occur.

The thickness of the cured film is not particularly limited, but is preferably from 100 to 1,000 $\mu$m. In an application where weather resistance is highly demanded, such as an outdoor air conditioning unit installed along the coast, a traffic signal pole, a sign board, etc., from 100 to 200 $\mu$m is preferred. Here, as mentioned above, in a case where the thickness is thick, such can be achieved by selecting the fluidized bed dipping method.

[Production method for carboxy group-containing fluororesin]

The method for producing a carboxy group-containing fluororesin of the present invention is a method which comprises melt-kneading a mixture comprising a hydroxy group-containing fluororesin and an acid anhydride to obtain a kneaded product containing a carboxy group-containing fluororesin.

As the hydroxy group-containing fluororesin, the above-mentioned hydroxy group-containing fluororesin (B) may be mentioned.

As the acid anhydride, the above-mentioned acid anhydride (C1) may be mentioned.

Each component is preferably preliminarily pulverized into a powder form.

The apparatus to be used for the mixing may, for example, be a high speed mixer, a V-type mixer, an inversion mixer, etc.

The apparatus to be used for the melt-kneading may, for example, be a single-screw extruder, a twin-screw extruder, a planetary gear, etc.

The kneaded product is preferably pelletized after cooling.

The melt-kneading temperature is at least the glass transition temperature of the hydroxy group-containing fluororesin and lower than the decomposition temperature of the respective components. Specifically, from 80 to 140°C is preferred. When the melt-kneading temperature is at least the above lower limit value, the hydroxy group-containing fluororesin and the acid anhydride can be sufficiently contacted in a molten state, and the reaction proceeds sufficiently. When the melt-kneading temperature is at most the above upper limit value, deterioration of the carboxy group-containing fluororesin and the hydroxy group-containing fluororesin can be sufficiently suppressed.

As the acid anhydride, it is preferred to select one which can be melted in the above temperature range.

The melt-kneading time is preferably from 10 seconds to 20 minutes, particularly preferably from 15 seconds to 10 minutes. When the melt-kneading time is at least the above lower limit value, the reaction between hydroxy groups of the hydroxy group-containing fluororesin and the acid anhydride will sufficiently proceed. When the melt-kneading time is at most the upper limit value, deterioration of the carboxy group-containing fluororesin and the hydroxy group-containing fluororesin can be sufficiently suppressed.

The amount of the acid anhydride is preferably from 0.1 to 2.0 mol, particularly preferably from 0.2 to 1.5 mol, relative to 1 mol of the hydroxy groups in the hydroxy group-containing fluororesin,. When the amount of the acid anhydride is at least the above lower limit value, the hydroxy groups in the hydroxy group-containing fluororesin, will be sufficiently converted to carboxy groups, and it is possible to obtain a carboxy group-containing fluororesin having a sufficiently low melt viscosity and excellent affinity with the pigment. When the amount of the acid anhydride (C1) is at most the above upper limit value, the amount of unreacted acid anhydride can be reduced and an influence of the acid anhydride to the carboxy group-containing fluororesin can be suppressed.

(Mechanism of action)

In the method for producing a carboxy group-containing fluororesin of the present invention as described above, hydroxy groups of the hydroxy group-containing fluororesin and the acid anhydride are reacted in the melt-kneading, to obtain a carboxy group-containing fluororesin, whereby a carboxy group-containing fluororesin with little gelation can be obtained from the following reasons.

1. Since the reaction is conducted in a kneading apparatus, the thermal history is less as compared with the case where the reaction is conducted in a solvent, and the molecular weight of the carboxy group-containing fluororesin is less likely to rise. As a result, the carboxy group-containing fluororesin is less likely to undergo gelation.
2. Since there is no desolvation process, the carboxy group-containing fluororesin is less likely to undergo gelation.

Now, the present invention will be described in detail with reference to Examples and Comparative Examples. However, it should be understood that the present invention is by no means thereby limited. Ex. 1-7 are Examples of the present invention, and Ex. 8 is a Comparative Example.

[Measuring methods, evaluation methods]

(Glass transition temperature)

The glass transition temperature is the intermediate point glass transition temperature measured by a differential scanning calorimetry (DSC) method.

(Molecular weight)

The number average molecular weight and the mass average molecular weight are values obtained as calculated as polystyrene by gel permeation chromatography (GPC) method.

(Average particle size)

The average particle size of a powder is a value obtained from the 50% average volume particle size distribution by measurement by means of a laser diffraction particle size distribution analyzer (manufactured by Sympatec Inc., Helos-Rodos).

(Appearance of cured film)

The state of the surface of a cured film was visually observed and judged by the following standards.

○ (good): The cured film was excellent in surface smoothness, and no cissing or failure in wettability was observed.
× (bad): The cured film was poor in surface smoothness, and cissing or failure in wettability was observed.

(The number of voids (gaps) in cured film)

A cured film-attached aluminum plate was cut, and the cross-section of the cured film was observed by a scanning electron microscope under the following measurement conditions, whereby judgement was made by the following standards.

<Measurement conditions>

Testing machine: JSM-5900LV, manufactured by Japan Electronics Co., Ltd.,
Accelerating voltage: 20 kV,
Magnification: 10,000 times,
Treatment before measurement: Platinum coating at 20 mA for 45 seconds by Auto Fine coater, JFC-1300, manufactured by Nippon Electronics Co., Ltd.

<Judgment standards>

○ (good): Voids (gaps) were not substantially observed in the cured film.
× (bad): A large number of voids (gaps) were observed in the cured film.

(Weather resistance)

A cured film-attached aluminum plate was installed outdoor in Naha-city, Okinawa Prefecture, and the gloss of the surface of the cured film immediately before the installation and the gloss of the surface of the cured film after two years, were measured by means of a gloss meter (manufactured by Nippon Denshoku Industries Co., Ltd., PG-1M). When the value of the gloss immediately before the installation is set to be 100%, the percentage of the value of the gloss after the two years is calculated as a gloss retention (unit: %), and the weather resistance was judged according to the following standards. Here, the gloss retention was measured and calculated in accordance with JIS K 5600-1-7.

○ (good): The gloss retention was at least 80%, and no discoloration or the like of the cured film was observed.
× (bad): The gloss retention was less than 80%, and discoloration or the like of the cured film was observed.

(Accelerated weathering)

Using a xenon weather meter (manufactured by Suga Test Instruments Co., Ltd.), the gloss of the surface of the cured film immediately before the test and the gloss of the surface of the cured film after 100 hours of the test, were measured by means of a gloss meter (manufactured by Nippon Denshoku Industries Co., Ltd., PG-1M). When the value of the gloss immediately before the test is set to be 100%, the percentage of the value of the gloss after the 100 hours of the test is calculated as a gloss retention (unit: %), and the accelerated weathering resistance was judged according to the following standards. In an accelerated weathering test, usually water is sprayed, but here, instead of spraying water, a 1% aqueous hydrogen peroxide solution was used. The gloss retention was measured and calculated in accordance with JIS K 5600-1-7.

<Test conditions>

Relative humidity: 70% RH,
Temperature: 50°C,
Light source: 80 W/m$^2$ (300 to 400 nm).

<Judgment standards>

○ (good): The gloss retention was at least 50%, and no discoloration or the like of the cured film was observed.
✕ (bad): The gloss retention was less than 50%, and discoloration or the like of the cured film was observed.

[Components used for preparing powder coating material]

Hydroxy group-containing fluororesin (B-1): manufactured by Asahi Glass Company, Limited, Lumiflon (registered trademark) LF710F, hydroxy value: 51.3 mgKOH/g, glass transition temperature: 55°C, number average molecular weight: 10,000.
Hydroxy group-containing fluororesin (B-2): manufactured by Asahi Glass Company, Limited, Lumiflon (registered trademark) LF916F, hydroxy value: 100.9 mgKOH/g, glass transition temperature: 39°C, number average molecular weight: 7,000.

Acid anhydride (C1-1): succinic anhydride (manufactured by Tokyo Kasei Kogyo Co., Ltd., reagent).
Anhydride (C1-2): hexahydrophthalic anhydride (manufactured by New Japan Chemical Co., Ltd. RIKACID (registered trademark) HH).
Compound (C2-1): 3-isocyanate propyl triethoxysilane (manufactured by Momentive Performance Materials Japan).
Curing agent (D1-1): a blocked isocyanate curing agent (manufactured by Degussa, VESTAGON (registered trademark) B1530).
Pigment (E-1): Titanium oxide (manufactured by DuPont, Ti-Pure (registered trademark) R960, titanium oxide content: 89 mass%).
Fluororesin (F1-1): PVDF (manufactured by Dongyue Co., PVDF DS203, mass average molecular weight: 270,000, number average molecular weight: 160,000, melting point: 170°C).
Thermosetting resin (F2-1): polyester resin (manufactured by Daicel Cytec, CRYLCOAT (registered trademark) 4890-0, number average molecular weight: 2,500, mass average molecular weight: 4,400, hydroxy value: 30 mgKOH/g).
Curing catalyst (G-1): dibutyltin dilaurate.
Degassing agent (H-1): benzoin.
Surface conditioning agent (H-2): leveling agent for powder coating material (manufactured by BYK-Chemie Inc., BYK (registered trademark)-360P).

[Ex. 1 to 8]

(Production of powder coating material)

The components listed in Table 1 were mixed for about 10 to 30 minutes using a high speed mixer (manufactured by Yusaki Co., Ltd.) to obtain a powdery mixture. The mixture was subjected to melt-kneading for 2 minutes by means of a biaxial extruder (manufactured by Thermo Prism Ltd., 16 mm extruder) at a barrel temperature set at 120°C, to obtain pellets. The pellets were pulverized at room temperature using a pulverizer (manufactured by FRITSCH, device name: rotor speed mill P14), followed by classification by means of a 150 mesh sieve, to obtain a powder coating material having an average particle size of about 40 μm.
Further, with respect to the powder coating material, the infrared absorption spectrum by infrared spectroscopy was obtained. With respect to the powder coating materials in Ex. 1 to 3 and Ex. 5 to 7, the peak of ester bonds and the peak of carboxy groups associated with the reaction of hydroxy groups in the hydroxy group-containing fluororesin (B) and the acid anhydride (C1) were confirmed. Further, with respect to the powder coating material in Ex. 4, the peak of urethane bonds associated with the reaction of hydroxy groups in the hydroxy group-containing fluororesin (A) and the compound (C2) was confirmed.

(Preparation of test piece)

Using an electrostatic coater (manufactured by Onoda Cement Corporation, device name: GX3600C), a powder coating material was applied by electrostatic coating on one surface of an aluminum plate subjected to chromate treatment and kept for 20 minutes in a 200°C atmosphere. The coated plate was allowed to cool to room temperature to obtain the aluminum plate with a cured film having a thickness of 55 to 65 $\mu$m. The obtained cured film-coated aluminum plate was used as a test piece and evaluated. The results are shown in Table 1.

[Table 1]

| Ex. | | | 1 | 2 | 3 | 4 | 5 | 6 | 7 | 8 |
|---|---|---|---|---|---|---|---|---|---|---|
| Hydroxy group-containing fluororesin (B) | (B-1) | Amount (g) | 52 | 52 | 52 | 52 | - | 17 | - | 52 |
| | | Hydroxy group amount (moL) | 0.048 | 0.048 | 0.048 | 0.048 | - | 0.0155 | - | 0.048 |
| | (B-2) | Amount (g) | - | - | - | - | 43.4 | - | 43.4 | - |
| | | Hydroxy group amount (moL) | - | - | - | - | 0.078 | - | 0.078 | - |
| Acid anhydride (C1) or compound (C2) | (C1-1) | Amount (g) | 1.39 | 2.32 | - | - | 1.16 | 1.39 | 1.04 | - |
| | | Amount (moL) | 0.014 | 0.023 | - | - | 0.0116 | 0.0139 | 0.0104 | - |
| | (C1-2) | Amount (g) | - | - | 3.57 | - | - | - | - | - |
| | | Amount (moL) | - | - | 0.023 | - | - | - | - | - |
| | (C2-1) | Amount (g) | - | - | - | 1.15 | - | - | - | - |
| | | Amount (moL) | - | - | - | 0.00465 | - | - | - | - |
| | Number of moles per mol of hydroxy group in hydroxy group-containing fluororesin (B) | | 0.292 | 0.479 | 0.479 | 0.097 | 0.149 | 0.0897 | 0.133 | - |
| Curing agent (D1-1) | | Amount (g) | 13 | 13 | 13 | 13 | 21.7 | 13 | 19.5 | 13 |
| Pigment (E-1) | | Amount (g) | 35 | 35 | 35 | 35 | 35 | 35 | 35 | 35 |
| Other resin (F1-1) | | Amount (g) | - | - | - | - | - | - | 6.5 | - |
| Other resin (F2-1) | | Amount (g) | - | - | - | - | - | 39 | - | - |
| Curing catalyst | (G-1) | Amount (g) | 0.0063 | 0.0063 | 0.0063 | 0.0063 | 0.0063 | 0.0063 | 0.0063 | 0.0063 |
| Other components (H) | (H-1) | Amount (g) | 0.4 | 0.4 | 0.4 | 0.4 | 0.4 | 0.4 | 0.4 | 0.4 |
| | (H-2) | Amount (g) | 1 | 1 | 1 | 1 | 1 | 1 | 1 | 1 |
| Evaluations of cured film | Appearance | | ○ | ○ | ○ | ○ | ○ | ○ | ○ | ○ |
| | Voids (gaps) | | ○ | ○ | ○ | ○ | ○ | ○ | ○ | × |
| | Weather resistance | | ○ | ○ | ○ | ○ | ○ | ○ | ○ | × |
| | Accelerated weathering resistance | | ○ | ○ | ○ | ○ | ○ | ○ | ○ | × |

EP 3 031 873 B1

23

As shown in Table 1, the cured films formed from the powder coating materials in Ex. 1 to 7, had few voids (gaps) in the cured films and showed excellent weatherability.

On the other hand, with respect to the cured film formed from the powder coating material in Ex. 8 wherein the acid anhydride (C1) or the compound (C2) was not used, numerous voids (gaps) in the cured film were observed, and the weather resistance was insufficient.

The powder coating material obtainable by the process of the present invention is useful for forming a cured film on a surface of e.g. a traffic signal, a telephone pole, a road sign pole, a bridge, a railing, a building material (gate, fence, siding material for a house, curtain wall, roof, etc.), a car body or parts (bumper, wiper blade, etc.), a household appliance (outdoor unit of air conditioner, exterior of water heater, etc.), a blade for wind power generation, a solar cell back sheet, a back surface of a heat collection mirror for solar power generation, an eggplant battery exterior, etc.

## Claims

1.  A process for producing a powder coating material containing a powder (X) composed of a composition ($\alpha$) comprising a fluororesin (A) having carboxy groups, or alkoxysilyl groups and urethane bonds, and a curing agent (D), said process comprising the following step (a) and step (b),

    (a) a step of melt-kneading a mixture comprising a hydroxy group-containing fluororesin (B), an acid anhydride (C1) or a compound (C2) having an alkoxysilyl group and an isocyanate group, and the curing agent (D), to obtain a kneaded product composed of the composition ($\alpha$),
    (b) a step of pulverizing the kneaded product to obtain the powder (X).

2.  The process for producing a powder coating material according to Claim 1, wherein said mixture further contains a pigment (E).

3.  The process for producing a powder coating material according to Claim 1 or 2, wherein said mixture further contains other resin (F) other than the fluororesin (A).

4.  The process for producing a powder coating material according to Claim 3, wherein said other resin (F) is at least one member selected from the group consisting of an acrylic resin, a polyester resin, an epoxy resin and an urethane resin.

5.  The process for producing a powder coating material according to Claim 1 or 2, which further contains the following step (d):

    (d) a step of dry-blending the powder (X) and a powder (Y) composed of a composition ($\beta$) containing other resin (F) other than the fluororesin (A) and containing no fluororesin (A).

6.  The process for producing a powder coating material according to Claim 5, wherein said other resin (F) is at least one member selected from the group consisting of an acrylic resin, a polyester resin, an epoxy resin and an urethane resin.

7.  The process for producing a powder coating material according to any one of Claims 1 to 6, wherein the hydroxy group-containing fluororesin (B) has units derived from tetrafluoroethylene or chlorotrifluoroethylene, units derived from a hydroxyalkyl vinyl ether, and units derived from at least one member selected from the group consisting of a cycloalkyl vinyl ether, an alkyl vinyl ether and a carboxylic acid vinyl ester.

8.  The process for producing a powder coating material according to any one of Claims 1 to 7, wherein the curing agent (D) is a blocked isocyanate curing agent (D1).

9.  The process for producing a powder coating material according to any one of Claims 1 to 8, wherein the number of moles of the acid anhydride (C1) is from 0.1 to 2.0 per mol of the hydroxy group in the hydroxy group-containing fluororesin (B), or the number of moles of the compound (C2) having an alkoxysilyl group and an isocyanate group is from 0.03 to 0.2 per mol of the hydroxy group in the hydroxy group-containing fluororesin (B).

10. A method for producing a carboxy group-containing fluororesin, which comprises melt-kneading a mixture comprising a hydroxy group-containing fluororesin and an acid anhydride to obtain a kneaded product containing a carboxy group-containing fluororesin.

**Patentansprüche**

1. Verfahren zur Herstellung eines Pulverbeschichtungsmaterials, enthaltend ein Pulver (X), bestehend aus einer Zusammensetzung ($\alpha$), umfassend ein Fluorharz (A) mit Carboxylgruppen oder mit Alkoxysilylgruppen und Urethanbindungen, und ein Härtungsmittel (D), das Verfahren umfassend die nachstehenden Schritt (a) und Schritt (b),

   (a) ein Schritt des Schmelzknetens eines Gemischs, umfassend ein Hydroxylgruppe-enthaltendes Fluorharz (B), ein Säureanhydrid (C1) oder eine Verbindung (C2) mit einer Alkoxysilylgruppe und einer Isocyanatgruppe, und das Härtungsmittel (D), um ein gekneteres Produkt, bestehend aus der Zusammensetzung ($\alpha$), zu erhalten,
   (b) ein Schritt des Pulverisierens des gekneteten Produktes, um das Pulver (X) zu erhalten.

2. Verfahren zur Herstellung eines Pulverbeschichtungsmaterials nach Anspruch 1, wobei das Gemisch weiter ein Pigment (E) enthält.

3. Verfahren zur Herstellung eines Pulverbeschichtungsmaterials nach Anspruch 1 oder 2, wobei das Gemisch weiter ein anderes Harz (F), das von dem Fluorharz (A) verschieden ist, enthält.

4. Verfahren zur Herstellung eines Pulverbeschichtungsmaterials nach Anspruch 3, wobei das andere Harz (F) mindestens ein Mitglied, ausgewählt aus der Gruppe, bestehend aus einem Akrylharz, einem Polyesterharz, einem Epoxidharz und einem Urethanharz, ist.

5. Verfahren zur Herstellung eines Pulverbeschichtungsmaterials nach Anspruch 1 oder 2, das weiter den folgenden Schritt (d) enthält:

   (d) ein Schritt des Trockenmischens des Pulvers (X) und eines Pulvers (Y), bestehend aus einer Zusammensetzung ($\beta$), enthaltend anderes Harz (F), das von dem Fluorharz (A) verschieden ist, und enthaltend kein Fluorharz (A).

6. Verfahren zur Herstellung eines Pulverbeschichtungsmaterials nach Anspruch 5, wobei das andere Harz (F) mindestens ein Mitglied, ausgewählt aus der Gruppe, bestehend aus einem Akrylharz, einem Polyesterharz, einem Epoxidharz und einem Urethanharz, ist.

7. Verfahren zur Herstellung eines Pulverbeschichtungsmaterials nach einem der Ansprüche 1 bis 6, wobei das Hydroxylgruppe-enthaltende Fluorharz (B) Einheiten, abgeleitet von Tetrafluorethylen oder Chlortrifluorethylen, Einheiten, abgeleitet von einem Hydroxyalkylvinylether, und Einheiten, abgeleitet von mindestens einem Mitglied, ausgewählt aus der Gruppe, bestehend aus einem Cycloalkylvinylether, einem Alkylvinylether und einem Carbonsäurevinylester, aufweist.

8. Verfahren zur Herstellung eines Pulverbeschichtungsmaterials nach einem der Ansprüche 1 bis 7, wobei das Härtungsmittel (D) ein blockiertes Isocyanat-Härtungsmittel (D1) ist.

9. Verfahren zur Herstellung eines Pulverbeschichtungsmaterials nach einem der Ansprüche 1 bis 8, wobei die Molzahl des Säureanhydrides (C1) von 0,1 bis 2,0 pro Mol der Hydroxylgruppe in dem Hydroxylgruppe-enthaltenden Fluorharz (B) beträgt oder die Molzahl der Verbindung (C2) mit einer Alkoxysilylgruppe und einer Isocyanatgruppe von 0,03 bis 0,2 pro Mol der Hydroxylgruppe in dem Hydroxylgruppe-enthaltenden Fluorharz (B) beträgt.

10. Verfahren zur Herstellung eines Carboxylgruppe-enthaltenden Fluorharzes, das Schmelzkneten eines Gemischs, umfassend ein Hydroxylgruppe-enthaltendes Fluorharz und ein Säureanhydrid, um ein gekneteres Produkt, enthaltend ein Carboxylgruppe-enthaltendes Fluorharz, zu erhalten, umfasst.

**Revendications**

1. Procédé pour produire un matériau de revêtement en poudre contenant une poudre (X) composée d'une composition ($\alpha$) comprenant une résine fluorée (A) comportant des groupes carboxy, ou des groupes alcoxysilyle et des liaisons uréthane, et un agent durcisseur (D), ledit procédé comprenant l'étape (a) et l'étape (b) qui suivent :

(a) une étape de malaxage à l'état fondu d'un mélange comprenant une résine fluorée contenant un groupe hydroxy (B), un anhydride d'acide (C1) ou un composé (C2) comportant un groupe alcoxysilyle et un groupe isocyanate, et l'agent durcisseur (D), pour que soit obtenu un produit malaxé composé de la composition (α),
(b) une étape de pulvérisation du produit malaxé pour que soit obtenue la poudre (X).

2. Procédé pour produire un matériau de revêtement en poudre selon la revendication 1, dans lequel ledit mélange contient en outre un pigment (E).

3. Procédé pour produire un matériau de revêtement en poudre selon la revendication 1 ou 2, dans lequel ledit mélange contient en outre une autre résine (F) différente de la résine fluorée (A).

4. Procédé pour produire un matériau de revêtement en poudre selon la revendication 3, dans lequel ladite autre résine (F) est au moins un membre choisi dans l'ensemble constitué par une résine acrylique, une résine de polyester, une résine époxy et une résine d'uréthane.

5. Procédé pour produire un matériau de revêtement en poudre selon la revendication 1 ou 2, qui comprend en outre l'étape (d) suivante :

(d) une étape de mélange à sec de la poudre (X) et d'une poudre (Y) composée d'une composition (β) contenant une autre résine (F) différente de la résine fluorée (A) et ne contenant pas de résine fluorée (A).

6. Procédé pour produire un matériau de revêtement en poudre selon la revendication 5, dans lequel ladite autre résine (F) est au moins un membre choisi dans l'ensemble constitué par une résine acrylique, une résine de polyester, une résine époxy et une résine d'uréthane.

7. Procédé pour produire un matériau de revêtement en poudre selon l'une quelconque des revendications 1 à 6, dans lequel la résine fluorée contenant un groupe hydroxy (B) comporte des motifs dérivés de tétrafluoroéthylène ou de chlorotrifluoroéthylène, des motifs dérivés d'un hydroxyalkylvinyléther, et des motifs dérivés d'au moins un membre choisi dans l'ensemble constitué par un cycloalkylvinyléther, un alkylvinyléther et un ester vinylique d'acide carboxylique.

8. Procédé pour produire un matériau de revêtement en poudre selon l'une quelconque des revendications 1 à 7, dans lequel l'agent durcisseur (D) est un agent durcisseur de type isocyanate bloqué (D1).

9. Procédé pour produire un matériau de revêtement en poudre selon l'une quelconque des revendications 1 à 8, dans lequel le nombre de moles de l'anhydride d'acide (C1) est de 0,1 à 2,0 par mole du groupe hydroxy dans la résine fluorée contenant un groupe hydroxy (B), ou bien le nombre de moles du composé (C2) comportant un groupe alcoxysilyle et un groupe isocyanate est de 0,03 à 0,2 par mole du groupe hydroxy dans la résine fluorée contenant un groupe hydroxy (B).

10. Procédé pour produire une résine fluorée contenant un groupe carboxy, qui comprend le malaxage à l'état fondu d'un mélange comprenant une résine fluorée contenant un groupe hydroxy et un anhydride d'acide pour que soit obtenu un produit malaxé contenant une résine fluorée contenant un groupe carboxy.

**EP 3 031 873 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003105269 A
- JP 2003096377 A